# EUROPÄISCHE PATENTANMELDUNG

(11) **EP 3 396 325 A1**
(43) Veröffentlichungstag der Anmeldung: **31.10.2018**
(21) Anmeldenummer: 17168013.5
(22) Anmeldetag: 25.04.2017
(51) Int. Cl.: G01D 5/12, G01D 11/24

(54) **VORRICHTUNG ZUM ÜBERWACHEN EINER MASCHINE ODER EINES AGGREGATES**

(71) Anmelder: Siemens Aktiengesellschaft, 80333 München (DE)
(72) Erfinder: Anders, Peter, 91052 Erlangen (DE); Ludwig, Klaus, 91058 Erlangen (DE); Theile, Oliver, 13437 Berlin (DE); Villnow, Michael, 90765 Fürth (DE)

(57) **Zusammenfassung**

Die Erfindung betrifft eine Vorrichtung (3) zum Überwachen einer Maschine (2) oder eines Aggregates, umfassend ein Gehäuse (28), in welchem eine Energiequelle (1), ein Sensor (20,22) und eine Auswerteeinrichtung (24) angeordnet sind, wobei der Sensor (20) und die Auswerteeinrichtung (24) zur Messung einer Kenngröße der Maschine (2) oder des Aggregates vorgesehen sind, weiterhin aufweisend ein am Gehäuse (28) angeordnetes Haltemittel (29), welches ausgestaltet ist das Gehäuse (28) lösbar an der Maschine (2) oder an das Aggregat zu befestigen, wobei ein Verwaltungsmittel (30) und ein Funkwellen-Empfangsmittel (31) vorhanden ist, wobei das Funkwellen-Empfangsmittel (31) einen Ausgang (32) aufweist und ausgestaltet ist bei Anwesenheit von Funkwellen eines mobilen Endgerätes (50) ein Signal an dem Ausgang (32) bereitzustellen, das Verwaltungsmittel (30) ist mit dem Ausgang (32) verbunden und ausgestaltet bei einem Signal von einem Ruhezustand in einem Betriebszustand zu wechseln.

## Beschreibung

Die Erfindung betrifft eine Vorrichtung zum Überwachen einer Maschine oder eines Aggregates, umfassend ein Gehäuse, in welchem eine Energiequelle, ein Sensor und eine Auswerteeinrichtung angeordnet sind, wobei der Sensor und die Auswerteeinrichtung zur Messung einer Kenngröße der Maschine oder des Aggregates vorgesehen sind, weiterhin aufweisend ein am Gehäuse angeordnetes Haltemittel, welches ausgestaltet ist, das Gehäuse lösbar an der Maschine oder an das Aggregat zu befestigen.

Bei der Überwachung des Betriebes, beispielsweise einer elektrisch rotierenden Maschine, werden Kenngrößen, beispielsweise ein abgegebenes Drehmoment, eine abgegebene mechanische Leistung oder ein Energieverbrauch in bestimmten Intervallen überprüft, um Wartungsintervalle zu koordinieren oder bei Bedarf frühzeitig Gegenmaßnahmen einzuleiten. Eine elektrische rotierende Maschine ist beispielsweise ein Motor oder ein Generator. Die Ermittlung derartiger Kenngrößen erfordert einen hohen messtechnischen Aufwand, insbesondere wenn die elektrische rotierende Maschine ohne einen Frequenzumrichter oder ein Motor-Management- und/oder Steuergerät betrieben wird.

Derartige Vorrichtungen zum Überwachen einer Maschine oder eines Aggregates sind vorzugsweise als autarke, drahtlose Elektroniksysteme ausgestaltet und haben daher keinen Zugang zu einer permanenten Stromversorgung. Sie werden daher meist mithilfe von Energiespeichern, wie Akkumulatoren oder großen Kondensatoren betrieben. Die in diesen Speichern vorhandene Energie reicht nicht aus, um die Elektronik permanent in einem aktiven Zustand betreiben zu können. Daher werden große Teile der Elektronik über weite Zeitintervalle in einen inaktiven Zustand versetzt. Problematisch ist es nun, die Elektronik aus diesem inaktiven Zustand aufzuwecken ohne einen permanenten relativ hohen Stromverbrauch hinnehmen zu müssen. Dies ist insoweit relevant, als das die Elektronik auf Interkationen mit einem Benutzer reagieren soll. Diese Interaktionen sind nicht vorhersehbar, wodurch ein zeitliches Verfahren nicht zur Anwendung kommen kann.

Der Erfindung liegt die Aufgabe zugrunde, eine Vorrichtung zur Überwachung einer Maschine oder eines Aggregates anzugeben, welche ohne einen Stromverbrauch des Energiespeichers aus einen inaktiven Zustand jederzeit aufweckbar ist.

Die Aufgabe wird für die Vorrichtung dadurch gelöst, dass ein Verwaltungsmittel und ein Funkwellen-Empfangsmittel vorhanden ist, wobei das Funkwellen-Empfangsmittel einen Ausgang aufweist und ausgestaltet ist, bei Anwesenheit von Funkwellen eines mobilen Endgerätes ein Signal an dem Ausgang bereitzustellen, das Verwaltungsmittel ist mit dem Ausgang verbunden und ausgestaltet bei einem Signal von einem Ruhezustand in einen Betriebszustand zu wechseln.

Die Vorrichtung kann erfindungsgemäß beispielsweise ein passives RFID-Tag benutzen. Dieses Tag besitzt dann einen Ausgang, mit dem das Anliegen eines externen Feldes signalisiert werden kann. Der Vorteil ist, dass die Vorrichtung komplett in einem stromlosen Zustand verharren kann, denn ein Energieimpuls für das Aufwecken wird durch das Empfangen der Funkwellen bereitgestellt. Diese Energie des Energieimpulses sorgt also für ein erstes initialisiertes Aufwecken der Vorrichtung und sodann wird erst eine Verbindung zu der internen Energiequelle geschaltet.

In einer weiteren Ausgestaltung ist das Verwaltungsmittel auszugestalten, ausgehend von dem Betriebszustand Funktionseinheiten zu aktivieren. Das bedeutet, wenn in den Funkwellen für die Initialauslösung bereits eine Information zu einer bestimmten Verbindung oder zum Aktivieren einer bestimmten Funktionseinheiten enthalten ist, so kann bewusst weiterhin energiesparend nur eine bestimmte Funktionseinheit aktiviert werden.

In einer vorteilhaften Ausgestaltung ist eine Funktionseinheit als eine Funkkommunikationseinheit ausgestaltet, welche dabei ausgestaltet ist, nach einer Aktivierung durch das Verwaltungsmittel eine Kommunikationsverbindung zu dem mobilen Endgerät aufzubauen. Die Information zu dem Verbindungsaufbau könnte in einem Dateninhalt der initialen Funkverbindung eingebettet sein.

Insbesondere für den Einsatz in einer rauen Industrieumgebung ist das Gehäuse der Vorrichtung, um einen Eindringen von Feststoffen und Flüssigkeiten zu verhindern, als ein geschlossenes Gehäuse ausgestaltet, wobei das Material des Gehäuses durchlässig für elektromagnetische Strahlung ist.

Das Gehäuse für die Vorrichtung weist demnach keine Öffnung auf, was zum einen ein Preisvorteil bei der Herstellung des Gehäuses ist und zum anderen ein komplett geschlossenes Gehäuse die höheren Anforderungen an Schutzarten z.B. IP67 leicht erfüllt. Das komplett geschlossene Gehäuse muss lediglich durchlässig für elektromagnetische Strahlung sein. Dann können zum Koppeln der Vorrichtung mit dem mobilen Endgerät zwischen der Verwaltungseinheit und einem entsprechenden Gegenstück die notwendigen Informationen aus der Vorrichtung ausgetauscht werden. Für die Darstellung von Informationen weist das mobile Endgerät ein Display auf. Die Vorrichtung selber muss keine Anzeigeeinheit haben.

Ist das Gehäuse der Vorrichtung als ein metallisches Gehäuse ausgestaltet, so ist im Gehäuse eine Öffnung angeordnet und in der Öffnung ist eine Flachspulenantenne angeordnet und um ein Eindringen von Feststoffen und Flüssigkeiten zu verhindern, ist die Öffnung mit einem Material, welches die elektromagnetische Strahlung durchlässt, verschlossen.

Da insbesondere bei metallischen Gehäusen ein Funkwellen-Empfangsmittel, wie beispielsweise eine Flachspulenantenne, stark beeinträchtigt wird und eventuell vorhandene externe Funkwellen zum Aufwecken der Vorrichtung zu stark gedämpft werden, ist es von Vorteil, wenn links und rechts der Öffnung eine Fläche aus Ferritfolie angeordnet ist. Abhängig von einer Abstrahlcharakteristik der Flachspulenantenne könnte auch eine hinter der Flachspulenantenne angeordnete Ferritfolie hilfreich sein.

Eine andere Variante sieht anstelle oder zusätzlich zur Öffnung einen nicht leitfähigen Schlitz im Gehäuse vor. Dieser verläuft sinnvollerweise über dem Einbauort der Antenne. Der Schlitz sollte etwas länger als die Antenne sein. Beispielsweise könnte als Schlitz für Funkwellen die Trennung zwischen einem Gehäusedeckel zu einem Gehäuseunterteil sein, wobei zwischen dem Deckel und dem Unterteil eine nicht leitfähige Dichtung angeordnet ist.

Um eine Vorrichtung besonders flexibel auszugestalten sind die Funktionseinheiten als eine Datenerfassungseinheit, eine Datenaustauscheinheit, eine Cloud-Verbindungseinheit, eine Speichereinheit oder eine Steuereinheit ausgestaltet.

Im Hinblick auf eine vorausschauende Prognose für mögliche Wartungsintervalle, ist bei der Vorrichtung das Verwaltungsmittel dazu ausgestaltet, unabhängig von dem Signal bzw. von den externen Funkwellen zyklisch von dem Ruhezustand in den Betriebszustand zu wechseln und dann über den Sensor und die Auswerteeinrichtung die Kenngröße der Maschine oder des Aggregates zu messen und abzuspeichern um danach wieder in den Ruhezustand zu wechseln.

So könnte beispielsweise eine Maschine stündlich überwacht werden und je Stunde ein Messwert abgespeichert werden. Wenn dann z.B. nach zwei Wochen Betrieb ein Servicetechniker mit einen mobilen Gerät zu der Maschine kommt, kann er durch Aufwecken der Vorrichtung diese abgespeicherten Daten einlesen.

Die Zeichnung zeigt ein Ausführungsbeispiel der Erfindung. Dabei zeigt die
- FIG 1: eine Vorrichtung zum Überwachen einer Maschine oder eines Aggregates und
- FIG 2: einen Längsschnitt einer elektrischen rotierenden Maschine mit einer angebrachten Vorrichtung.

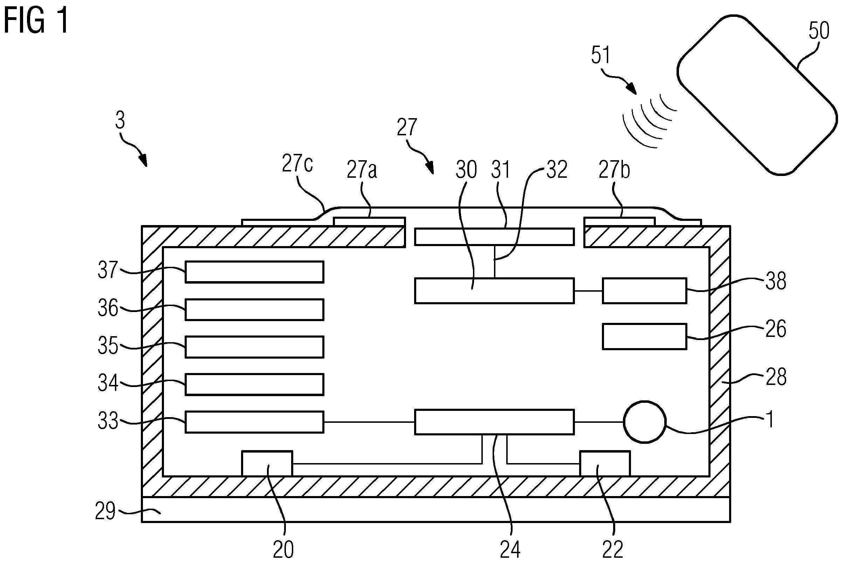

Gemäß FIG 1 ist eine Vorrichtung 3 zum Überwachen einer Maschine 2 oder eines Aggregates dargestellt. Die Vorrichtung 3kann als eine Sensorvorrichtung ausgestaltet sein, welche mittels eines Haltemittels 29, beispielsweise ein starker Magnet, an die Maschine 2 befestigt werden kann. Die Vorrichtung 3 weist ein Gehäuse 28 auf, in welchem eine Energiequelle 1, ein erster Sensor 20 und ein zweiter Sensor 22 und eine Auswerteeinrichtung 24 zur Auswertung der Sensorsignale angeordnet ist. Die Energiequelle 1 speist dabei die Auswerteeinrichtung 24 und die in der Vorrichtung 3 angeordneten Funktionseinheiten.

Eine solche Vorrichtung 3 ist vorzugsweise als ein autarkes, drahtloses Elektroniksystem ausgestaltet, welches einfach, beispielsweise magnetisch im - Vorbeigehen - an die Maschine angeheftet werden kann. Das autarke und das drahtlose bringt allerdings das Problem mit sich, dass die Vorrichtung 3 keinen Zugang zu einer permanenten Stromversorgung hat und irgendwann der Energiespeicher 1 erschöpft ist. Daher ist es ratsam nur Energie zu verbrauchen, wenn die Vorrichtung mit ihren Sensoren 20,22 auch Messwerte aufnehmen soll bzw. wenn, beispielsweise ein Inbetriebsetzer vor Ort ist, und mit einem mobilen Endgerät 50 Daten auslesen möchte.

Das Verwaltungsmittel 30 ist mit einem Funkwellen-Empfangsmittel 31 verbunden. Das Funkwellen-Empfangsmittel 31 ist dabei ausgestaltet, bei Anwesenheit von Funkwellen 51 eines mobilen Endgerätes 50 ein Signal über einen Ausgang 32 an das Verwaltungsmittel 30 abzugeben. Daraufhin wechselt das Verwaltungsmittel 30 von einem Ruhezustand in einen Betriebszustand. Aus diesem Betriebszustand heraus kann nun das Verwaltungsmittel 30 Funktionseinheiten, wie beispielsweise eine Funkkommunikationseinheit 38, eine Datenerfassungseinheit 33, eine Datenaustauscheinheit 34, eine Cloud-Verbindungseinheit, eine Speichereinheit 36 oder eine Steuerungseinheit 37 aktivieren.

Um eine Kommunikationsverbindung zu dem mobilen Endgerät 50 aufzubauen, wird das Verwaltungsmittel aber zunächst die Funkkommunikationseinheit 38 aktivieren. Mögliche Verbindungsinformationen zum Aufbau der Verbindung der Vorrichtung 3 zu dem mobilen Endgerät 50 könnten in den ersten Funkwellen enthalten sein.

Für die Ausgestaltung des Gehäuses 28 gibt es im Wesentlichen zwei Ausführungsformen. Bei der ersten Ausführungsform ist das Gehäuse 28 als ein geschlossenes Gehäuse 28 ausgestaltet, wobei das Material des Gehäuses 28 durchlässig für elektromagnetische Strahlung ist.

In der zweiten Ausgestaltungsvariante ist das Gehäuse als ein metallisches Gehäuse 28 ausgestaltet und im Gehäuse 28 ist eine Öffnung 27 angeordnet und in der Öffnung 27 ist das Funkwellen-Empfangsmittel 31 in Form einer Flachspulantenne angeordnet und um ein Eindringen von Feststoffen und Flüssigkeiten zu verhindern, ist die Öffnung 27 mit einen Material, welches die elektromagnetische Strahlung durchlässt, verschlossen. Derartiges Material könnte beispielsweise eine Dekorfolie 27, wie sie auch bei Industriepanels eingesetzt wird, sein.

Ist das Gehäuse 28 als ein metallisches Gehäuse 28 ausgestaltet, so werden aufgrund des metallischen Gehäuses 28 Funkwellen von dem mobilen Endgerät50 möglicherweise stark abgeschwächt. Um dem entgegenzuwirken, ist links und rechts der Öffnung 27 je eine erste Fläche 27a und eine zweite Fläche 27b aus Ferritfolie angeordnet.

Insbesondere für eine vorausschauende Maschinenüberwachung und dabei eine gleichzeitige maximale Energieeinsparung des Stromes für die Vorrichtung, beispielsweise wenn die Vorrichtung auf einer Ölplattform eingesetzt ist, wo nur alle 4 Wochen ein Servicetechniker vor Ort ist, ist es sehr vorteilhaft, wenn das Verwaltungsmittel 30 ausgestaltet ist, unabhängig von dem Signal also unabhängig von einem externen mobilen Gerät 50 zyklisch von dem Ruhezustand in den Betriebszustand zu wechseln und dann über den Sensor 20,22 und die Auswerteeinrichtung 24 die Kenngröße der Maschine 2 oder des Aggregates zu messen und abzuspeichern und danach wieder in den Ruhezustand zu wechseln.

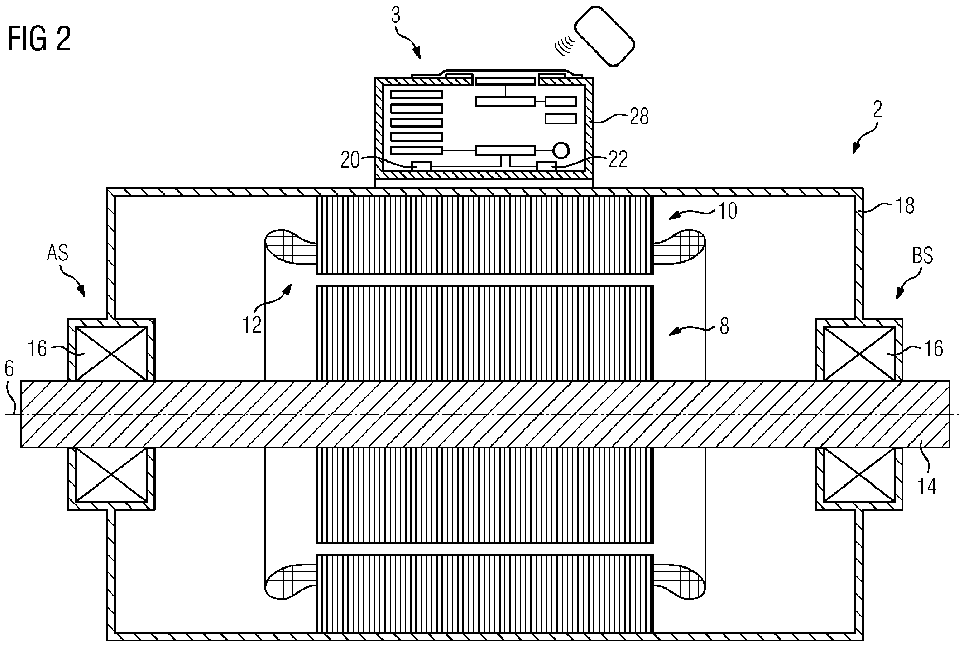

FIG 2 zeigt einen Anwendungsfall bei einer elektrisch rotierenden Maschine 2. Es ist ein Längsschnitt der elektrisch rotierenden Maschine 2 gezeigt. Die elektrisch rotierende Maschine 2 ist als eine Asynchronmaschine ausgeführt und weist einen um eine Rotationsachse 6 rotierbaren Rotor 8 und einen den Rotor 8 umgebenen Stator 10 auf, wobei sich zwischen dem Rotor 8 und dem Stator 10 ein Spalt 12 befindet. Der Rotor 8 weist eine Welle 14 auf, die über jeweils mindestens ein Lager 16 an einer Antriebsseite AS und an einer Nicht-Antriebsseite BS der elektrischen rotierenden Maschine 2 gelagert ist. Der Rotor 8 und der Stator 10 sind in einem geschlossenen Maschinengehäuse 18 untergebracht.

Die Vorrichtung 3 wird nun als ein Sensorsystem betrachtet und umfasst mindestens den ersten Sensor 20 und mindestens den zweiten Sensor 22, eine Auswerteeinrichtung 24 und eine Ausgabeeinheit 26. Der erste Sensor 20, der zweite Sensor 22, die Auswerteeinrichtung 24 und die Ausgabeeinheit 26 befinden sich in dem geschlossenen Gehäuse 28 der Vorrichtung 3 also des Sensorsystems. Das Gehäuse 28 liegt mittels eines Haltemittels 29 auf der Oberfläche des geschlossenen Maschinengehäuses 18 auf und ist beispielsweise, insbesondere über Schrauben oder Magnete, lösbar mit dem Maschinengehäuse 18 verbunden. Zur Befestigung ist ebenfalls eine Klebeverbindung denkbar.

Der erste Sensor 20 ist als ein Magnetfeldsensor ausgeführt, wobei während des Betriebes der elektrischen rotierenden Maschine 2 von dem Magnetfeldsensor ein äußeres Streufeld des Stators 10 gemessen wird, aus dessen, insbesondere periodischer, zeitlicher Änderung eine Statorfrequenz ermittelt wird. Der zweite Sensor 22 ist als ein Beschleunigungssensor ausgeführt, der ein Schwingungsverhalten des Rotors 8 erfasst. Mit Hilfe einer Fast Fourier Transformation, kurz FFT, wird das vom Beschleunigungssensor erfasste Schwingungssignal in den Frequenzbereich transformiert und anschließend aus dem ermittelten Spektrum des Schwingungssignals die mechanische Rotorfrequenz ermittelt. Eine Schlupffrequenz der Asynchronmaschine wird aus der mechanischen Rotorfrequenz und der der Statorfrequenz berechnet.

Aus der Schlupffrequenz und der zusätzlichen, insbesondere typenspezifischen, Kennwerten der Asynchronmaschine werden Zustandsgrößen der Asynchronmaschine berechnet. Die Kennwerte sind beispielsweise in einen Datenblatt und/oder einem Typenschild zu finden und beinhalten beispielsweise eine Polpaarzahl, eine Nenndrehzahl, eine mechanisch abgegebene Nenndrehleistung und einen Herkunftsgrad.

Im betrachteten Arbeitsbereich von einem Leerlauf bis zu einem ungefähren halben Kippmoment und/oder bis zu ungefähr 1,5 fachen Nenndrehmoment verhält sich die Schlupffrequenz näherungsweise linear und proportional zum von der elektrischen rotierenden Maschine 2 abgegebenen Drehmoment. Daher wird das abgegebene Drehmoment mit guter Genauigkeit im betrachteten Arbeitsbereich aus der Schlupffrequenz der Asynchronmaschine ermittelt. Aus dem abgegeben Drehmoment wird die abgegebene mechanische Leistung berechnet. Die aufgenommene elektrische Leistung wird näherungsweise aus der abgegebenen mechanischen Leistung und dem Wirkungsgrad berechnet, wobei der Wirkungsgrad im betrachteten Arbeitsbereich als konstant angenommen wird. Über eine zeitliche Integration wird die aufgenommene elektrische Energie ermittelt.

Zumindest eine berechnete oder ermittelte Kenngröße der elektrisch rotierenden Maschine 2 wird über eine Ausgabeeinheit 26 ausgegeben. Eine derartige Ausgabeeinheit 26 ist beispielsweise eine weitere Kommunikationseinheit. Für eine Übertragung der Zustandsgrößen an einen übergeordneten Datensammler weist die Vorrichtung 3 eine Cloud-Verbindungseinheit 35 auf. Die Datenübertragung findet vorzugsweise drahtlos, beispielsweise über Bluetooths oder Wlan statt. Darüber hinaus weist die Vorrichtung 3 eine Steuerungseinheit 37, die beispielsweise den, insbesondere zeitlichen, Ablauf der Messung aus Auswertung steuert.

## Patentansprüche

1. Vorrichtung (3) zum Überwachen einer Maschine (2) oder eines Aggregates, umfassend ein Gehäuse (28), in welchem eine Energiequelle (1),
ein Sensor (20,22) und
eine Auswerteeinrichtung (24) angeordnet sind, wobei der Sensor (20) und die Auswerteeinrichtung (24) zur Messung einer Kenngröße der Maschine (2) oder des Aggregates vorgesehen sind, weiterhin aufweisend ein am Gehäuse (28) angeordnetes Haltemittel (29), welches ausgestaltet ist das Gehäuse (28) lösbar an der Maschine (2) oder an das Aggregat zu befestigen,
**dadurch gekennzeichnet, dass** ein Verwaltungsmittel (30) und ein Funkwellen-Empfangsmittel (31) vorhanden ist, wobei das Funkwellen-Empfangsmittel (31) einen Ausgang (32) aufweist und ausgestaltet ist bei Anwesenheit von Funkwellen eines mobilen Endgerätes (50) ein Signal an dem Ausgang (32) bereitzustellen, das Verwaltungsmittel (30) ist mit dem Ausgang (32) verbunden und ausgestaltet bei einem Signal von einem Ruhezustand in einem Betriebszustand zu wechseln.

2. Vorrichtung (3) nach Anspruch 1, wobei das Verwaltungsmittel (30) ausgestaltet ist ausgehend von dem Betriebszustand weitere Funktionseinheiten zu aktivieren.

3. Vorrichtung (3) nach Anspruch 2, wobei eine Funktionseinheit als eine Funkkommunikationseinheit (38) ausgestaltet ist, welche ausgestaltet ist nach einer Aktivierung durch das Verwaltungsmittel (30) eine Kommunikationsverbindung zu dem mobilen Endgerät (50) aufzubauen.

4. Vorrichtung (3) nach einem der Ansprüche 1 bis 3, wobei das Gehäuse (28), um ein Eindringen von Feststoffen und Flüssigkeiten zu verhindern, als ein geschlossenes Gehäuse (28) ausgestaltet ist, wobei das Material des Gehäuses (28) durchlässig für elektromagnetische Strahlung ist.

5. Vorrichtung (3) nach einem der Ansprüche 1 bis 3, wobei das Gehäuse (28) als ein metallisches Gehäuse (28) ausgestaltet ist und im Gehäuse (28) eine Öffnung (27) angeordnet ist und in der Öffnung (27) eine Flachspulenantenne angeordnet ist und um ein Eindringen von Feststoffen und Flüssigkeiten zu verhindern ist die Öffnung (27) mit einem Material, welches die elektromagnetische Strahlung durchlässt, verschlossen.

6. Vorrichtung (3) nach Anspruch 5, wobei links und rechts der Öffnung (27) je eine Fläche (27a,27b) aus Ferritfolie angeordnet ist.

7. Vorrichtung (3) nach einem der Ansprüche 2 bis 6, wobei die Funktionseinheiten als
eine Datenerfassungseinheit (33),
eine Datenaustauscheinheit (34),
eine Cloud-Verbindungseinheit (35),
eine Speichereinheit (36) oder
eine Steuerungseinheit (37)
ausgestaltet ist.

8. Vorrichtung (3) nach einem der Ansprüche 2 bis 7, wobei das Verwaltungsmittel (30) ausgestaltet ist unabhängig von dem Signal zyklisch von dem Ruhezustand in den Betriebszustand zu wechseln und dann über den Sensor (20) und die Auswerteeinrichtung (24) die Kenngröße der Maschine oder des Aggregates zu messen und abzuspeichern und danach wieder in den Ruhezustand zu wechseln.
